(19) Europäisches Patentamt

European Patent Office

Office européen des brevets

(11) Veröffentlichungsnummer: **0 227 595 B1**

(12) **EUROPÄISCHE PATENTSCHRIFT**

(45) Veröffentlichungstag der Patentschrift:
04.04.90

(21) Anmeldenummer: **86810552.9**

(22) Anmeldetag: **01.12.86**

(51) Int. Cl.⁴: **F16B 13/06**

(54) **Spreizdübel.**

(30) Priorität: **19.12.85 DE 3544916**

(43) Veröffentlichungstag der Anmeldung:
**01.07.87 Patentblatt 87/27**

(45) Bekanntmachung des Hinweises auf die Patenterteilung:
**04.04.90 Patentblatt 90/14**

(84) Benannte Vertragsstaaten:
**AT CH DE FR GB LI**

(56) Entgegenhaltungen:
**WO-A-85/03984**
**DE-A- 2 607 338**
**DE-U- 1 989 624**
**DE-U- 8 003 328**
**US-A- 3 883 129**

(73) Patentinhaber: **HILTI Aktiengesellschaft,
FL-9494 Schaan(LI)**

(72) Erfinder: **Wohlwend, Ernst, Churerstrasse 96,
FL-9485 Nendeln(LI)**
Erfinder: **Gassmann, Horst-Detlef, Landstrasse,
FL-9491 Ruggell(LI)**

(74) Vertreter: **Wildi, Roland, Hilti Aktiengesellschaft
Patentabteilung, FL-9494 Schaan(LI)**

ACTORUM AG

**Beschreibung**

Die Erfindung betrifft einen Spreizdübel mit einer Spreizhülse, einem Spreizkörper, einer ein Gewinde aufweisenden Ankerstange zur Relativverschiebung des Spreizkörpers gegenüber der Spreizhülse, einem an der Ankerstange vorgesehenen Gegenlager und einer zwischen Spreizhülse und Gegenlager angeordneten Verlängerungshülse, wobei Spreizhülse und Verlängerungshülse axial begrenzt teleskopisch ineinander verschiebbare Bereiche aufweisen und das der Spreizhülse zugewandte Ende des teleskopischen Bereiches der Verlängerungshülse und das der Verlängerungshülse zugewandte Ende des teleskopischen Bereiches der Spreizhülse einander in der Axialprojektion überdeckende Anschläge aufweisen.

Bei einer Vielzahl der dem Befestigen von Gegenständen an einem Untergrund dienenden Spreizdübel muß gewährleistet sein, daß allenfalls vorhandene Hohllagen zwischen den Gegenständen und dem Untergrund eliminiert werden können.

Ein bekannter Spreizdübel (WO-A 8 503 984) weist zu diesem Zwecke eine Spreizhülse auf, die mittels eines von einer Ankerstange entgegen der Setzrichtung eingezogen kegeligen Spreizkörpers radial aufgeweitet wird. Der Spreizdübel verfügt ferner über eine Verlängerungshülse, die von der Ankerstange axial durchsetzt und gegenüber der Spreizhülse axial verschiebbar ist, wobei einander zugewandte Bereiche der beiden Hülsen teleskopisch ineinandergreifen. Durch die Verschiebbarkeit der Verlängerungshülse gegenüber der Spreizhülse lassen sich die erwähnten Hohllagen eliminieren, indem ein auf die festzuspannenden Gegenstände einwirkendes Gegenlager der Ankerstange die Gegenstände und gleichzeitig auch die Verlängerungshülse gegenüber der Spreizhülse in Setzrichtung verschiebt.

Zum Setzen wird der Spreizdübel von der Bohrungsmündung her in die Aufnahmebohrung eingeführt. Soll der so gesetzte Spreizdübel wieder entfernt werden müssen, lassen sich das Gegenlager und die Verlängerungshülse problemlos entfernen. An der Spreizhülse und am Spreizkörper ist jedoch kein Angriff möglich, der ein Entfernen dieser Teile erlaubt, ohne daß eine weitere Verspreizung erfolgt. Ist die Ankerstange einstückig mit dem Spreizkörper verbunden, läßt sich auch diese nicht entfernen. Eine vollständige Entfernung und eine Wiederverwendung des Spreizdübels ist damit nicht möglich.

Bekannt ist ferner aus der DE-A 2 607 338 ein Spreizdübel mit einer Verlängerungshülse, wobei die ineinandergreifenden Bereiche von Spreizhülse und Verlängerungshülse einander in der Axialprojektion überdeckende Anschläge aufweisen. Aufgrund einer sich an den Bauteilen abstützenden Schulter an der Verlängerungshülse läßt sich dieser Dübel nicht universell, insbesondere nicht versenkt anwenden.

Der Erfindung liegt die Aufgabe zugrunde, einen universell, insbesondere auch versenkt anwendbaren Spreizdübel zu schaffen, der sich sicher, ohne Zuhilfenahme gesonderter Angriffmittel, aus der Aufnahmebohrung entfernen und wiederverwenden läßt.

Erfindungsgemäß wird die Aufgabe dadurch gelöst, daß ein die Anschläge gegenseitig in Anschlagposition treibendes Federmittel vorgesehen ist.

Aufgrund der Anschläge ist auch ein Entfernen der Spreizhülse des nicht verankerten Spreizdübels aus der Aufnahmebohrung möglich, indem an der aus dem Untergrund ragenden Verlängerungshülse gezogen wird. Durch das Zusammenwirken der Anschläge der beiden Hülsen wird die Zugbewegung der Verlängerungshülse auf die Spreizhülse übertragen, ohne daß ein Weiten der Spreizhülse eintritt, da auf den Spreizkörper keine Kräfte einwirken. Über die Ankerstange kann anschließend auch der von der Spreizhülse befreite Spreizkörper entfernt werden.

Falls der Spreizdübel im Untergrund verankert ist, wird vorerst die Verankerung gelöst werden, indem durch Lösen des Gegenlagers, vorzugsweise einer Gewindemutter, die Verspannung der Gegenstände freigegeben wird. Durch in Setzrichtung wirkende Schläge auf die Ankerstange wird der Spreizkörper aus der Spreizhülse ausgetrieben, sodaß sich diese in den unausgeweiteten Zustand rückverformen kann. Daraufhin kann der Spreizdübel in der voran geschilderten Weise entfernt werden.

Das Federmittel, einfachheitshalber eine zwischen Schultern an den beiden Hülsen eingespannte Druckfeder, bewirkt, daß nach dem Einführen des Spreizdübels in die Aufnahmebohrung auf jeden Fall ein ausreichender Verschiebeweg zwischen den Hülsen vorhanden ist, um allfällige Hohllagen zu eliminieren. Durch das Zusammenwirken der Anschläge ist sichergestellt, daß die Hülsen trotz der zwischen diesen wirkenden Kraft der Druckfeder gegenseitig stets in teleskopischem Eingriff bleiben. Für das Zurückziehen des Spreizdübels nach erfolgtem Lösen des Gegenlagers bewirkt das Federmittel, daß die Anschläge selbsttätig in Anschlagposition gelangen, so daß jede Zugbewegung an der Verlängerungshülse ohne Leerweg direkt auf die Spreizhülse übertragen wird.

Vorzugsweise ist der Anschlag der Verlängerungshülse als Wulst mit gegenüber einem den teleskopischen Bereich bildenden, im Außendurchmesser verjüngten Fortsatz größerem Außendurchmesser ausgebildet. Ein vorzugsweise ringförmig umlaufender Wulst zeichnet sich einerseits durch einfache Herstellbarkeit und andererseits durch hohe Stabilität aus.

Ebenso aus Gründen einfacher Herstellbarkeit und hoher Stabilität ist mit Vorteil der Anschlag der Spreizhülse als Bund mit gegenüber einem den teleskopischen Bereich bildenden, im Innendurchmesser erweiterten Abschnitt kleinerem Innendurchmesser ausgebildet. Der Bund der Spreizhülse gewährleistet in Zusammenwirkung mit dem Wulst der Verlängerungshülse eine gleichmäßige Übertragung der Zugkräfte zwischen den beiden Hülsen. Beim Zurückziehen des Spreizdübels tritt demzufolge kein hinderliches Verkanten der Hülsen in der Aufnahmebohrung auf.

Für das axiale Zusammenfügen der Verlängerungshülse mit der Spreizhülse bedarf es der radialen Nachgiebigkeit einer der beiden Hülsen im Ausmaß der radialen Erstreckung eines der Anschläge. Zweckmäßig ist deshalb die Spreizhülse durch schalenartige Segmente gebildet, die beispielsweise durch einen Federring zu einer Hülse zusammengehalten sind. Eine solche Ausbildung der Spreizhülse zeichnet sich zudem durch leichte Aufweitbarkeit und leichte Rückverformbarkeit in den unausgeweiteten Zustand aus.

Die Erfindung wird nachstehend anhand einer Zeichnung, die ein Ausführungsbeispiel eines Spreizdübels im Längsschnitt wiedergibt, näher erläutert.

Der insgesamt mit 1 bezeichnete Spreizdübel besteht im wesentlichen aus einer insgesamt mit 2 bezeichneten Spreizhülse, einer insgesamt mit 3 bezeichneten Verlängerungshülse, einer Ankerstange 4 mit einem endseitig angeformten kegeligen Spreizkörper 5 und einem Gegenlager in Form einer Gewindemutter 6.

Die Gewindemutter 6 stützt sich über eine Unterlegscheibe 7 an der freien Stirnseite der Verlängerungshülse 3 ab. Durch Drehen der auf einem Außengewinde 8 der Ankerstange 4 sitzenden Gewindemutter 6 in Aufschraubrichtung ist die Verlängerungshülse 3 zur Spreizhülse 2 hin verschiebbar. Hierbei ist die Kraft einer Druckfeder 9 zu überwinden, die sich einerseits an der Verlängerungshülse 3 und andererseits an der Spreizhülse 2 abschultert.

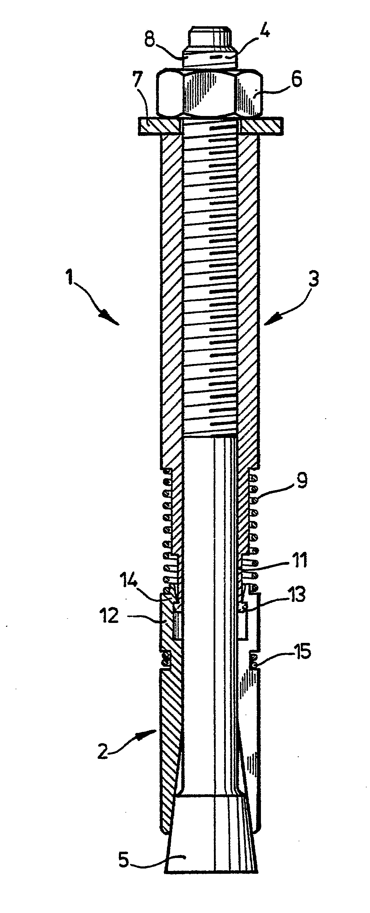

Die Verlängerungshülse 3 ragt teleskopisch mit einem in Setzrichtung weisenden verjüngten Fortsatz 11 in einen Abschnitt 12 der Spreizhülse 2. Die durch den Fortsatz 11 und den Abschnitt 12 gebildeten teleskopischen Bereiche weisen endseitig in Axialprojektion sich überdeckende Anschläge in Form eines ringförmigen Wulstes 13 bzw. eines umlaufenden Bundes 14 auf. Durch Zusammmenwirken des Wulstes 13 mit dem Bund 14 ist das Auseinanderschieben der Verlängerungshülse 3 gegenüber der Spreizhülse 2, wie aus der Zeichnung entnehmbar, begrenzt.

Die Spreizhülse 2 besteht aus einzelnen schalenartign Segmenten, die durch einen Federring 15 zur Hülsenform zusammengehalten werden. Diese Ausbildung der Spreizhülse 2 erleichtert das Zusammenstecken derselben mit der Verlängerungshülse 3 und erlaubt ein radiales Weiten der Spreizhülse 2 mit geringen Kräften wie auch ein leichtes Rückverformen in den unausgeweiteten Zustand.

Der in einer Aufnahmebohrung befindliche Spreizdübel 1 lässt sich aus dieser zur allfälligen Wiederverwendung entfernen. Hierzu muss lediglich, bei nicht geweiteter Spreizhülse 2, an der aus dem Untergrund ragenden Verlängerungshülse 3 entgegen der Setzrichtung gezogen werden. Das Zusammenwirken von Wulst 13 und Bund 14 gewährleistet ein spreizungsfreies Mitverschieben der Spreizhülse 2.

## Patentansprüche

1. Spreizdübel mit einer Spreizhülse (2), einem Spreizkörper (5), einer ein Gewinde (8) aufweisenden Ankerstange (4) zur Relativverschiebung des Spreizkörpers (5) gegenüber der Spreizhülse (2), einem an der Ankerstange (4) vorgesehenen Gegenlager (6) und einer zwischen Spreizhülse (2) und Gegenlager (6) angeordneten Verlängerungshülse (3), wobei Spreizhülse (2) und Verlängerungshülse (3) axial begrenzt teleskopisch ineinander verschiebbare Bereiche aufweisen und das der Spreizhülse (2) zugewandte Ende des teleskopischen Bereiches der Verlängerungshülse (3) und das der Verlängerungshülse (3) zugewandte Ende des teleskopischen Bereiches der Spreizhülse (2) einander in der Axialprojektion überdeckende Anschläge (13, 14) aufweisen, dadurch gekennzeichnet, daß ein die Anschläge (13, 14) gegenseitig in Anschlagposition treibendes Federmittel (9) vorgesehen ist.

2. Spreizdübel nach Anspruch 1, dadurch gekennzeichnet, daß der Anschlag der Verlängerungshülse (3) als Wulst (13) mit gegenüber einem den teleskopischen Bereich bildenden, im Außendurchmesser verjüngten Fortsatz (11) größerem Außendurchmesser ausgebildet ist.

3. Spreizdübel nach Anspruch 1 oder 2, dadurch gekennzeichnet, daß der Anschlag der Spreizhülse (2) als Bund (14) mit gegenüber einem den teleskopischen Bereich bildenden, im Innendurchmesser erweiterten Abschnitt (12) kleinerem Innendurchmesser ausgebildet ist.

## Claims

1. An expansible dowel comprising an expansible sleeve (2), an expansion body (5), an anchor rod (4) having a thread (8) for the relative displacement of the expansion body (5) relative to the expansible sleeve (2), an abutment (6) provided on the anchor rod (4) and an extension sleeve (3) arranged between the expansible sleeve (2) and the abutment (6), in which respect the expansible sleeve (2) and the extension sleeve (3) have regions which are displaceable telescopically into one another in an axially limited manner and that end of the telescopic region of the extension sleeve (3) which faces the expansible sleeve (2) and that end of the telescopic region of the expansible sleeve (2) which faces the extension sleeve (3) have stops (13, 14) overlapping one another in axial projection, characterised in that a spring means (9) is provided which propels the stops (13, 14) mutually into the stop position.

2. An expansible dowel as claimed in claim 1, characterised in that the stop of the extension sleeve (3) is a bead (13) having an outside diameter which is larger as compared with an extension (11) which forms the telescopic region and which is narrowed in outside diameter.

3. An expansible dowel as claimed in claim 1 or 2, characterised in that the stop of the expansible sleeve (2) is a collar (14) having an inside diameter which is smaller as compared with a portion (12) which forms the telescopic region and which is widened in inside diameter.

## Revendications

1. Cheville à expansion, comprenant une douille expansible (2), un élément d'écartement (5), une barre d'ancrage (4) munie d'un filetage (8) pour le déplacement relatif de l'élément d'écartement (5) par rapport à la douille expansible (2), une contre-butée (6) prévue sur la barre d'ancrage (4) et une douille de rallonge (3) disposée entre la douille expansible (2) et la contre-butée (6), la douille expansible (2) et la douille de rallonge (3) présentant des zones qui peuvent être emboîtées l'une dans l'autre de manière télescopique et limitée dans le sens axial et l'extrémité de la zone télescopique de la douille de rallonge (3) dirigée vers la douille expansible (2) et l'extrémité de la zone télescopique de la douille expansible (2) dirigée vers la douille de rallonge (3) présentant, dans la projection axiale, des butées (13, 14) qui se recouvrent, caractérisée en ce qu'elle comprend un moyen élastique (9) par lequel les butées (13, 14) sont mutuellement poussées dans la position d'arrêt.

2. Cheville à expansion selon la revendication 1, caractérisée en ce que la butée de la douille de rallonge (3) est conformée en bourrelet (13) dont le diamètre extérieur est supérieur au diamètre extérieur réduit d'un appendice (11) formant la zone télescopique.

3. Cheville à expansion selon l'une des revendications 1 ou 2, caractérisée en ce que la butée de la douille expansible (2) est conformée en collet (14) dont le diamètre intérieur est inférieur au diamètre intérieur plus grand d'une section (12) formant la zone télescopique.

EP 0 227 595 B1